# FASCICULE DE BREVET EUROPEEN

(11) **EP 3 680 500 B1**
(45) Date de publication et mention de la délivrance du brevet: **15.06.2022**
(21) Numéro de dépôt: 20150600.3
(22) Date de dépôt: 07.01.2020
(51) Int. Cl.: F16C 33/78, F16C 33/80

(54) **PALIER À ROULEMENT ÉQUIPÉ D'UN DISPOSITIF D ÉTANCHÉITÉ**
WÄLZLAGER, DAS MIT EINER ABDICHTVORRICHTUNG AUSGESTATTET IST
ROLLER BEARING PROVIDED WITH A SEALING DEVICE

(30) Priorité: 11.01.2019 FR 1900273
(43) Date de publication de la demande: 15.07.2020
(73) Titulaire: NTN-SNR ROULEMENTS, 74000 Annecy (FR)
(72) Inventeur: DESNOYER, Fabien, 74000 Annecy (FR); CURTET, Alexandre, 73410 Saint Girod (Entrelacs) (FR)
(74) Mandataire: Sayettat, Julien Christian

(56) Documents cités:
- WO-A1-2017/055724
- JP-A- 2015 052 350

## Description

L'invention concerne un palier à roulement comprenant deux organes et des corps roulants disposés dans un espace de roulement formé entre lesdits organes pour permettre leur rotation relative autour d'un axe.

En particulier, l'invention s'applique aux paliers à roulement de véhicule automobile, notamment aux paliers de roue. De façon avantageuse, un palier suivant l'invention permet le montage d'une roue motrice ou non motrice de véhicule automobile, un organe étant tournant et comprenant des moyens de fixation de la roue tandis que l'autre organe est fixe et comprend des moyens de fixation sur un élément de suspension du véhicule.

Pour empêcher d'une part les fuites de lubrifiant présent dans l'espace de roulement et d'autre part la contamination dudit espace avec des polluants extérieurs, au moins un côté de l'espace de roulement peut être équipé d'un dispositif d'étanchéité.

En particulier, le dispositif d'étanchéité peut comprendre une armature solidaire d'un premier organe et une paroi solidaire du deuxième organe, ladite armature étant équipée d'un élément d'étanchéité dynamique qui présente au moins une lèvre disposée en contact frottant sur une section de la paroi.

Le document WO-2017/055724 décrit un palier à roulement dont au moins un côté de l'espace de roulement est équipé d'un dispositif d'étanchéité comprenant deux armatures solidaires de respectivement un organe, et comprenant respectivement une couronne amont et une couronne aval qui s'étendent axialement en étant disposées en regard radial pour former une chambre d'étanchéité, au moins une couronne étant équipée d'un élément d'étanchéité dynamique qui présente au moins une lèvre disposée dans ladite chambre en étant en contact frottant sur l'autre couronne.

Ce document décrit un palier à contact de roulement équipé d'un dispositif d'étanchéité comme décrit dans le préambule de la revendication indépendante annexée.

Pour satisfaire aux cahiers des charges de plus en plus sévères relativement à l'étanchéité, notamment pour la validation des paliers de roue par les constructeurs automobiles, cette solution conduit à un couple de frottement important qui, outre l'impact négatif sur l'énergie nécessaire à la rotation du palier, provoque un niveau de température de fonctionnement élevé et donc une usure prématurée de la lèvre frottante. En outre, cette usure est d'autant plus rapide que des polluants peuvent rentrer au niveau de la section de frottement et y demeurer lors de la rotation.

Pour tenter de résoudre ce problème, on peut proposer d'ajouter des déflecteurs pour former une chicane d'entrée qui est agencée pour limiter les échanges entre l'espace de roulement et l'extérieur, notamment au niveau de la section de frottement.

En particulier, le document WO-2018/192597 prévoit un palier à roulement dans lequel au moins un côté de l'espace de roulement présente une chambre annulaire en communication avec l'extérieur par une ouverture, ledit palier étant équipé d'un dispositif d'étanchéité tel que décrit précédemment, dans lequel :
- l'armature présente un secteur aval disposé dans la chambre en formant de part et d'autre un compartiment interne, dans lequel débouche l'ouverture, et un compartiment externe en communication avec l'espace de roulement et dans lequel est disposée au moins une lèvre frottante, ledit secteur aval présentant une géométrie en U dont la paroi externe forme un déflecteur qui s'étend dans ladite chambre en séparant avec la géométrie en U les compartiments interne et externe ;
- la paroi d'étanchéité présente une section extérieure qui borde la chambre sur une profondeur axiale depuis l'ouverture en formant avec le déflecteur un jeu réduit d'étanchéité entre l'ouverture et le compartiment externe.

Ainsi, on limite le risque de pénétration de polluants extérieurs dans l'espace à roulement grâce à :
- un déflecteur pour former obstacle à l'entrée desdits polluants dans le compartiment externe dans lequel la lèvre frottante est disposée ; et
- la formation en amont dudit déflecteur d'un compartiment interne en U avec des dimensions adaptées pour la récupération des polluants extérieurs entrant par l'ouverture, ledit compartiment interne pouvant être vidé par gravité sans venir polluer le compartiment externe.

Toutefois, cette solution ne donne pas entière satisfaction, en ce que le déflecteur présente une géométrie qui, en cas d'introduction de polluants dans le compartiment externe, rend difficile leur extraction par gravité et donc conduit à une pollution permanente de la section de frottement.

L'invention vise à perfectionner l'art antérieur en proposant notamment un palier à roulement équipé d'un dispositif d'étanchéité dont l'interface d'étanchéité est optimisée, notamment en étant agencée pour faciliter l'extraction par gravité des éventuels polluants entrés dans ladite interface.

A cet effet, l'invention propose un palier à roulement selon la revendication 1.

D'autres objets et avantages de l'invention apparaîtront dans la description qui suit, faite en référence aux figures annexées, dans lesquelles :

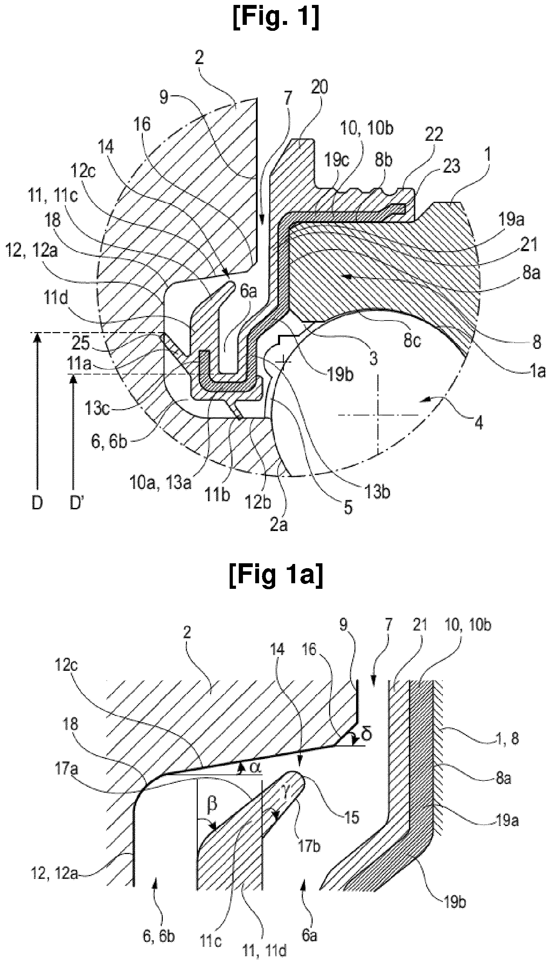

[Fig. 1] représente partiellement et en coupe longitudinale un palier à roulement équipé d'un dispositif d'étanchéité selon un mode de réalisation de l'invention ;
[Fig. 1a] est une vue agrandie de la figure 1 centrée sur le jeu réduit d'étanchéité formé à l'interface entre le déflecteur et la section extérieure de la paroi d'étanchéité.

En relation avec ces figures, on décrit ci-dessous un palier à roulement, en particulier pour le montage d'une roue motrice ou non motrice d'un véhicule automobile.

Le palier comprend deux organes, à savoir sur les figures un premier organe 1 disposé extérieurement en étant fixe et un deuxième organe 2 disposé intérieurement en étant tournant. Dans l'application considérée, la roue est destinée à être associée à l'organe intérieur 2 et l'organe extérieur 1 peut présenter des moyens de fixation du palier sur un élément de suspension du véhicule automobile.

Entre ces deux organes 1, 2, un espace de roulement 3 est formé pour permettre la rotation relative desdits organes autour d'un axe. Dans cette description, les termes de positionnement dans l'espace sont pris en référence à l'axe de rotation du palier (horizontal sur les figures). En particulier :
- le terme « intérieur » est relatif à une disposition proche de cet axe et le terme « extérieur » est relatif à une disposition à distance de cet axe ;
- les termes « axial » et « radial » sont relatifs à une direction respectivement suivant cet axe et s'éloignant ou se rapprochant de lui.

Pour permettre la rotation, chaque organe 1, 2 peut présenter deux pistes de roulement 1a, 2a espacées axialement de sorte à former dans l'espace de roulement 3 deux chemins de roulement dans lesquels sont disposées respectivement une rangée de corps roulants 4, lesdits corps roulants se présentant par exemple sous la forme de billes qui sont maintenues dans une rangée par l'intermédiaire d'une cage de rétention 5.

Toutefois, l'invention n'est pas limitée à un mode de réalisation du palier, en particulier relativement à la géométrie des corps roulants 4, à la géométrie et/ou à la disposition relative des organes fixe et tournant.

Les figures représentent un côté de l'espace de roulement 3 qui présente une chambre annulaire 6 en communication avec l'extérieur par l'intermédiaire d'une ouverture annulaire 7 formée entre les organes 1, 2.

Dans ce mode de réalisation, le premier organe 1 présente une extension 8 délimitant l'ouverture 7 avec une paroi extérieure 9 du deuxième organe 2, ladite extension étant sous la forme d'un anneau de section sensiblement rectangulaire délimitée par une paroi radiale d'extrémité 8a, une paroi axiale extérieure 8b et une paroi intérieure 8c s'étendant principalement dans la direction axiale et sur laquelle est formée une partie de la piste de roulement 1a.

Pour empêcher d'une part les fuites de lubrifiant présent dans l'espace de roulement 3 et d'autre part la contamination dudit espace avec des polluants extérieurs, notamment à base de boues, la chambre 6 est équipée d'un dispositif d'étanchéité.

Le dispositif d'étanchéité comprend :
- une armature 10 solidaire d'un premier organe 1, et pourvue d'un élément d'étanchéité dynamique 11 comprenant au moins une lèvre 11a, 11b disposée dans la chambre 6 ;
- une paroi 12 solidaire du deuxième organe 2 s'étendant dans la chambre 6, et contre laquelle la lèvre 11a, 11b est en contact frottant.

L'armature 10 peut être réalisée en matériau métallique, notamment par pliage d'une tôle emboutie.

Sur les figures, la paroi 12 est formée dans le deuxième organe 2. En variante, la paroi 12 peut être formée sur une pièce rapportée sur le deuxième organe 2, ladite pièce pouvant en outre présenter une structure similaire à l'armature 10, notamment en étant formée par pliage d'une tôle emboutie.

L'armature 10 présente un secteur aval 10a portant l'élément d'étanchéité 11, ledit secteur étant disposé dans la chambre 6 en formant de part et d'autre un compartiment interne 6a et un compartiment externe 6b.

Dans la description, les termes « amont » et « aval » sont définis par rapport au sens d'introduction des polluants dans l'ouverture 7, depuis l'extérieur vers l'intérieur. Par ailleurs, les termes « externe » et « interne » sont définis par rapport à l'orientation du palier tel que représenté, et se réfèrent à une disposition respectivement à gauche et à droite sur les figures.

Dans le mode de réalisation représenté, l'étanchéité dynamique est améliorée en prévoyant que l'élément d'étanchéité 11 présente deux lèvres 11a, 11b disposées dans le compartiment externe 6b et en contact frottant en deux endroits espacés de la paroi 12. En variante, au moins une lèvre 11a, 11b peut former un jeu d'étanchéité avec la paroi 12.

Dans le mode de réalisation représenté, la paroi 12 présente :
- une section radiale 12a, sur laquelle une lèvre extérieure 11a est en contact frottant, afin de former obstacle à la pénétration de polluants extérieurs dans l'espace de roulement 3 ; et
- une section axiale 12b disposée dans le prolongement de la piste de roulement 2a, notamment en s'étendant entre ladite piste de roulement et la section radiale 12a, et sur laquelle une lèvre intérieure 11b est en contact frottant, afin de former obstacle à la fuite de lubrifiants hors dudit espace de roulement.

Le secteur aval 10a présente une géométrie en U formée d'un fond 13a sensiblement axial bordé par deux parois - respectivement interne 13b et externe 13c - présentant chacune une hauteur radiale, la paroi externe 13c étant prolongée par un déflecteur 11c de l'élément d'étanchéité 11 qui s'étend dans la chambre 6 en séparant avec la géométrie en U les compartiments interne 6a et externe 6b.

La géométrie en U permet de former dans le compartiment interne 6a une zone de récupération des polluants extérieurs entrant par l'ouverture 7, la longueur du fond 13a et/ou la hauteur des parois radiales 13b, 13c étant suffisamment importante(s) pour contenir lesdits polluants dans ladite zone, et ainsi limiter leur pénétration dans le compartiment externe 6b.

Pour améliorer à la fois l'étanchéité dynamique et la compacité radiale du palier, la lèvre extérieure 11a présente une extrémité extérieure 25 en contact frottant sur la section radiale 12a en étant disposée suivant un diamètre D qui est supérieur au diamètre D' du fond 13a de la géométrie en U.

Pour limiter l'entrée de polluants extérieurs dans le compartiment externe 6b, la paroi 12 présente une section extérieure 12c reliée à la section radiale 12a par un congé de raccordement 18, ladite section extérieure bordant la chambre 6 sur une profondeur axiale depuis l'ouverture 7 en formant avec le déflecteur 11c un jeu réduit 14 d'étanchéité entre ladite ouverture et ledit compartiment externe.

Le déflecteur 11c présente une extrémité libre 15 qui est disposée en regard radial de la section extérieure 12c, le jeu d'étanchéité 14 étant formé entre ladite extrémité libre et ladite section extérieure.

En particulier, la section extérieure 12c et l'ouverture 7 présentent un bord commun 16 par rapport auquel l'extrémité libre 15 est en retrait axial, ce qui permet d'éviter que des polluants extérieurs venant de l'ouverture 7 ne coulent directement sur le déflecteur 11c, et ainsi de limiter les risques d'entrée desdits polluants dans le compartiment externe 6b.

En relation avec la figure 1a, le déflecteur 11c présente une face externe 17a qui est disposée dans le compartiment externe 6b en étant inclinée vers l'ouverture 7 d'un angle β compris entre 10° et 80°, notamment entre 40° et 60°, par rapport à une direction radiale.

Ainsi, la face externe 17a forme une pente pour guider vers l'extérieur d'éventuels polluants contenus dans le compartiment externe 6b, ce qui permet de faciliter l'évacuation par centrifugation et/ou gravité desdits polluants hors dudit compartiment externe.

Pour améliorer le guidage des polluants hors du compartiment externe 6b, la section extérieure 12c est inclinée extérieurement d'un angle α inférieur à 30° par rapport à une direction axiale.

De façon avantageuse, l'angle d'inclinaison β de la face externe 17a et l'angle d'inclinaison α de la section extérieure 12c sont tels que : β = - α/2 + θ, θ étant un angle positif supérieur à a/2 et inférieur à 80° de sorte que β soit supérieur à α. En particulier, l'angle θ peut être de l'ordre de 45°.

Sur les figures, l'élément d'étanchéité 11 présente une couronne 11d disposée dans le prolongement radial de la paroi externe 13c, le déflecteur 11c s'étendant depuis ladite couronne.

En particulier, la couronne 11d présente une épaisseur supérieure à celle du déflecteur 11c de sorte à pouvoir disposer ledit déflecteur au plus près de la section extérieure 12c, et donc de réduire les dimensions du jeu d'étanchéité 14, tout en limitant la hauteur radiale dudit déflecteur, afin de limiter son fléchissement lorsque des polluants s'écoulent sur lui

Pour fiabiliser l'absence de transfert de polluants depuis le compartiment interne 6a vers le compartiment externe 6b, le déflecteur 11c présente une face interne 17b disposée dans ledit compartiment interne en entourant le fond 13a de la géométrie en U.

En particulier, la face interne 17b est inclinée vers l'ouverture d'un angle γ compris entre 40° et 60° par rapport à une direction radiale, ce qui permet de guider vers l'ouverture 7 d'éventuels polluants contenus dans le compartiment interne 6a.

Dans le mode de réalisation représenté, l'angle α est mesuré par rapport à une direction axiale dans le sens trigonométrique, les angles β et γ étant mesurés dans le sens anti-trigonométrique par rapport à une direction radiale. En particulier, les faces externe 17a et interne 17b sont inclinées vers l'ouverture 7 par rapport à la direction radiale de respectivement une face de la couronne 11d.

En relation avec la figure 1a, l'angle γ de la face interne 17b est inférieur à l'angle β de la face externe 17a afin de former un déflecteur de géométrie conique qui s'effile depuis la couronne 11c vers son extrémité libre 15.

De façon avantageuse, la face interne 17b est disposée sensiblement dans l'alignement du bord commun 16 entre l'ouverture 7 et la section extérieure 12c, ce qui permet de guider les polluants depuis ladite face interne directement vers ladite ouverture. En particulier, le bord commun 16 présente un chanfrein d'angle δ sensiblement égal à l'angle γ de la face interne 17b.

Dans le mode de réalisation représenté, l'armature 10 présente un secteur amont 10b d'association à l'organe extérieur 1, ledit secteur amont présentant une paroi radiale 19a prolongée :
- en son extrémité intérieure par une paroi conique 19b reliant ladite paroi radiale à la paroi interne 13b du secteur aval 10a, et ;
- en son extrémité extérieure, par une paroi extérieure 19c sensiblement axiale ;
les parois radiale 19a et extérieure 19c étant disposées contre respectivement les parois d'extrémité 8a et extérieure 8b de l'extension 8.

De façon avantageuse, la géométrie conique de la paroi 19b de liaison des secteurs amont 10b et aval 10a permet d'écarter axialement ledit secteur aval de l'espace de roulement, mais également de disposer l'extrémité libre 15 du déflecteur 11c en retrait axial de l'ouverture 7, avec les avantages mentionnés précédemment.

Sur les figures, l'ouverture 7 est formée au moins partiellement entre le secteur amont 10b et le deuxième organe 2. En particulier, pour limiter la pénétration de polluants extérieurs dans l'ouverture 7, le secteur amont 10b porte :
- un déflecteur 20 sensiblement radial qui est interposé entre l'extérieur et la partie amont de l'ouverture 7, afin de former un chicane contre l'entrée de polluants extérieurs dans ladite partie amont ; et
- un voile d'étanchéité 21 disposé sur la paroi radiale 19a et en regard axial de la portion intérieure de la paroi 9, pouvant former avec ladite portion intérieure une ouverture 7 de dimension axiale réduite.

En outre, le secteur extérieur 10b présente un bourrelet 22 qui est disposé en appui sur l'excroissance 8 pour former étanchéité statique. En particulier, la paroi extérieure 19c présentant un bord libre 23 décalé radialement afin de permettre un contact entre le bourrelet 22 et la paroi axiale extérieure 8b qui soit garant de l'étanchéité statique.

L'élément d'étanchéité 11 peut être associé par surmoulage à l'armature 10. En particulier, L'élément d'étanchéité peut être réalisé en matériau souple, par exemple en élastomère, notamment à base de copolymère butadiène nitrile (NBR), éventuellement renforcé mécaniquement par des charges telles que du noir de carbone, de NBR hydrogéné (HNBR), de fluoropolymère ou de polyacrylate.

## Revendications

1. Palier à roulement comprenant deux organes (1, 2) et des corps roulants (4) disposés dans un espace de roulement (3) formé entre lesdits organes pour permettre leur rotation relative autour d'un axe, au moins un côté de l'espace de roulement présentant une chambre annulaire (6) en communication avec l'extérieur par une ouverture (7), ledit palier étant équipé d'un dispositif d'étanchéité comprenant :
- une armature (10) solidaire d'un premier organe (1), ladite armature présentant un secteur aval (10a) disposé dans la chambre (6) en formant de part et d'autre un compartiment interne (6a) et un compartiment externe (6b), ledit secteur aval portant un élément d'étanchéité (11) et présentant une géométrie en U formée d'un fond (13a) sensiblement axial bordé par deux parois - respectivement interne (13b) et externe (13c) - présentant chacune une hauteur radiale, ladite paroi externe étant prolongée par un déflecteur (11c) de l'élément d'étanchéité (11) qui s'étend dans ladite chambre en séparant avec la géométrie en U les compartiments interne (6a) et externe (6b) ;
- une paroi (12) solidaire du deuxième organe (2), ladite paroi présentant une section extérieure (12c) qui borde la chambre (6) sur une profondeur axiale depuis l'ouverture (7) en formant avec le déflecteur (11c) un jeu réduit d'étanchéité (14) entre l'ouverture (7) et le compartiment externe (6b),
le déflecteur (11c) présentant une face externe (17a) disposée dans le compartiment externe (6b), ladite face externe étant inclinée vers l'ouverture (7) d'un angle β compris entre 10° et 80° par rapport à une direction radiale, ledit palier étant **caractérisé en ce que** le déflecteur (11c) présente une extrémité libre (15) qui est disposée en regard radial de la section extérieure (12c).

2. Palier à roulement selon la revendication 1, **caractérisé en ce que** l'angle β est compris entre 40° et 60°.

3. Palier à roulement selon l'une des revendications 1 ou 2, **caractérisé en ce que** le déflecteur (11c) présente une face interne (17b) disposée dans le compartiment interne (6a), ladite face interne entourant le fond (13a) de la géométrie en U.

4. Palier à roulement selon la revendication 3, **caractérisé en ce que** la face interne (17b) est inclinée vers l'ouverture (7) d'un angle γ compris entre 40° et 60° par rapport à une direction radiale.

5. Palier à roulement selon la revendication 4, **caractérisé en ce que** l'angle γ de la face interne (17b) est inférieur à l'angle β de la face externe (17a).

6. Palier à roulement selon l'une des revendications 4 ou 5, **caractérisé en ce que** la section extérieure (12c) présente un bord commun (16) avec l'ouverture (7), la face interne (17b) étant disposée sensiblement dans l'alignement dudit bord.

7. Palier à roulement selon l'une quelconque des revendications 1 à 6, **caractérisé en ce que** la section extérieure (12c) est inclinée extérieurement d'un angle α inférieur à 30° par rapport à une direction axiale.

8. Palier à roulement selon la revendication 7, **caractérisé en ce que** l'angle d'inclinaison β de la face externe (17a) et l'angle d'inclinaison α de la section extérieure (12c) sont tels que : β = - a/2 + θ, θ étant un angle positif supérieur à a/2 et inférieur à 80° de sorte que β soit supérieur à α.

9. Palier à roulement selon l'une quelconque des revendications 1 à 8, **caractérisé en ce que** l'élément d'étanchéité (11) présente une lèvre (11a) disposée dans le compartiment externe (6b).

10. Palier à roulement selon la revendication 9, **caractérisé en ce que** la lèvre (11a) présente une extrémité extérieure (25) en contact frottant sur la section radiale (12a), ladite extrémité extérieure étant disposée suivant un diamètre D qui est supérieure au diamètre D' du fond (13a) de la géométrie en U.

11. Palier à roulement selon l'une quelconque des revendications 1 à 10, **caractérisé en ce que** la paroi (12) présente une section axiale (12b) disposée dans le prolongement d'une piste de roulement (2a) du deuxième organe (2), l'élément d'étanchéité (11) présentant une lèvre (11b) disposée dans le compartiment externe (6b).

12. Palier à roulement selon l'une quelconque des revendications 1 à 11, **caractérisé en ce que** la paroi (12) est formée dans le deuxième organe (2).

13. Palier à roulement selon l'une quelconque des revendications 1 à 12, **caractérisé en ce que** l'élément d'étanchéité (11) présente une couronne (11d) disposée dans le prolongement radial de la paroi externe (13c), le déflecteur (11c) s'étendant depuis ladite couronne.

14. Palier à roulement selon l'une quelconque des revendications 1 à 13, **caractérisé en ce que** l'armature (10) présente un secteur amont (10b) d'association au premier organe (1).

15. Palier à roulement selon la revendication 14, **caractérisé en ce que** le secteur amont (10b) porte un déflecteur (20) qui est interposé entre l'extérieur et la partie amont de l'ouverture (7).

## Patentansprüche

1. Wälzlager, zwei Organe (1, 2) und Rollkörper (4) umfassend, die in einem Wälzraum (3) angeordnet sind, der zwischen den Organen gebildet wird, um deren relative Drehung um eine Achse herum zu erlauben, wobei mindestens eine Seite des Wälzraumes eine ringförmige Kammer (6) aufweist, die durch eine Öffnung (7) mit der Außenseite in Verbindung steht, wobei das Lager mit einer Abdichtvorrichtung ausgestattet ist, umfassend:
- eine Armatur (10), die fest mit einem ersten Organ (1) verbunden ist, wobei die Armatur einen stromabwärtigen Sektor (10a) aufweist, der in der Kammer (6) angeordnet ist, und dabei beiderseits ein inneres Fach (6a) und ein äußeres Fach (6b) bildet, wobei der stromabwärtige Sektor ein Abdichtelement (11) trägt und eine U-Geometrie aufweist, die aus einem im Wesentlichen axialen Boden (13a) gebildet wird, der durch zwei - jeweils innere (13b) und äußere (13c) - Wände eingefasst ist, die jeweils eine radiale Höhe aufweisen, wobei die äußere Wand durch einen Abweiser (11c) des Abdichtelements (11) verlängert wird, der sich in der Kammer erstreckt und dabei mit der U-Geometrie das innere (6a) und äußere (6b) Fach trennt;
- eine Wand (12), die fest mit dem zweiten Organ (2) verbunden ist, wobei die Wand eine äußere Sektion (12c) aufweist, die die Kammer (6) auf einer axialen Tiefe von der Öffnung (7) aus einfasst, und dabei mit dem Abweiser (11c) ein verringertes Abdichtspiel (14) zwischen der Öffnung (7) und dem äußeren Fach (6b) bildet,
wobei der Abweiser (11c) eine äußere Seite (17a) aufweist, die in dem äußeren Fach (6b) angeordnet ist, wobei die äußere Seite um einen Winkel β zu der Öffnung (7) geneigt ist, der in Bezug auf eine radiale Richtung zwischen 10° und 18° liegt, wobei das Lager **dadurch gekennzeichnet ist, dass** der Abweiser (11c) ein freies Ende (15) aufweist, das radial gegenüber der äußeren Sektion (12c) angeordnet ist.

2. Wälzlager nach Anspruch 1, **dadurch gekennzeichnet, dass** der Winkel β zwischen 40° und 60° liegt.

3. Wälzlager nach einem der Ansprüche 1 oder 2, **dadurch gekennzeichnet, dass** der Abweiser (11c) eine innere Seite (17b) aufweist, die in dem inneren Fach (6a) angeordnet ist, wobei die innere Seite den Boden (13a) der U-Geometrie umgibt.

4. Wälzlager nach Anspruch 3, **dadurch gekennzeichnet, dass** die innere Seite (17b) um einen Winkel γ zu der Öffnung (7) geneigt ist, der in Bezug auf eine radiale Richtung zwischen 40° und 60° liegt.

5. Wälzlager nach Anspruch 4, **dadurch gekennzeichnet, dass** der Winkel γ der inneren Seite (17b) kleiner als der Winkel β der äußeren Seite (17a) ist.

6. Wälzlager nach einem der Ansprüche 4 oder 5, **dadurch gekennzeichnet, dass** die äußere Sektion (12c) einen gemeinsamen Rand (16) mit der Öffnung (7) aufweist, wobei die innere Seite (17b) im Wesentlichen in der Flucht des Randes angeordnet ist.

7. Wälzlager nach einem der Ansprüche 1 bis 6, **dadurch gekennzeichnet, dass** die äußere Sektion (12c) außen um einen Winkel α in Bezug auf eine axiale Richtung geneigt ist, der kleiner als 30° ist.

8. Wälzlager nach Anspruch 7, **dadurch gekennzeichnet, dass** der Neigungswinkel β der äußeren Seite (17a) und der Neigungswinkel α der äußeren Sektion (12c) derart sind, dass: β = - α/2 + θ, wobei θ ein positiver Winkel größer als α/2 und kleiner als 80° ist, sodass β größer als α ist.

9. Wälzlager nach einem der Ansprüche 1 bis 8, **dadurch gekennzeichnet, dass** das Abdichtelement (11) eine Lippe (11a) aufweist, die in dem äußeren Fach (6b) angeordnet ist.

10. Wälzlager nach Anspruch 9, **dadurch gekennzeichnet, dass** die Lippe (11a) ein äußeres Ende (25) in Reibkontakt auf der radialen Sektion (12a) aufweist, wobei das äußere Ende gemäß einem Durchmesser D angeordnet ist, der größer als der Durchmesser D' des Bodens (13a) der U-Geometrie ist.

11. Wälzlager nach einem der Ansprüche 1 bis 10, **dadurch gekennzeichnet, dass** die Wand (12) eine axiale Sektion (12b) aufweist, die in der Verlängerung einer Wälzbahn (2a) des zweiten Organs (2) angeordnet ist, wobei das Abdichtelement (11) eine Lippe (11b) aufweist, die in dem äußeren Fach (6b) angeordnet ist.

12. Wälzlager nach einem der Ansprüche 1 bis 11, **dadurch gekennzeichnet, dass** die Wand (12) in dem zweiten Organ (2) gebildet ist.

13. Wälzlager nach einem der Ansprüche 1 bis 12, **dadurch gekennzeichnet, dass** das Abdichtelement (11) einen Kranz (11d) aufweist, der in der radialen Verlängerung der äußeren Wand (13c) angeordnet ist, wobei sich der Abweiser (11c) aus dem Kranz erstreckt.

14. Wälzlager nach einem der Ansprüche 1 bis 13, **dadurch gekennzeichnet, dass** die Armatur (10) einen stromaufwärtigen Sektor (10b) in Verbindung mit dem ersten Organ (1) aufweist.

15. Wälzlager nach Anspruch 14, **dadurch gekennzeichnet, dass** der stromaufwärtige Sektor (10b) einen Abweiser (20) trägt, der zwischen der Außenseite und dem stromaufwärtigen Teil der Öffnung (7) eingesetzt ist.

## Claims

1. Roller bearing made up of two organs (1, 2) and rolling elements (4) placed in a rolling area (3) formed between the said organs to enable their relative rotation around an axis, with at least one side of the rolling area presenting an annular chamber (6) in communication with the outside via an opening (7), with the said bearing being equipped with a sealing device including:
- A frame (10) fixed to a first organ (1), with the said frame presenting a downstream sector (10a) placed in the chamber (6) forming on each side an inner compartment (6a) and an outer compartment (6b), with the said downstream sector bearing a sealing element (11) and presenting a U-shaped geometry formed of a sensibly axial bottom (13a) surrounded at its edges by two walls - inner (13b) and outer (13c) respectively - each presenting a radial height, with the said outer wall being extended by a deflector (11c) on the sealing element (11) that extends into the said chamber while separating with the U-shaped geometry the inner compartment (6a) and the outer compartment (6b);
- A wall (12) fixed to the second organ (2), the said wall presenting an outside section (12c) that borders the chamber (6) over an axial depth from the opening (7) forming with the deflector (11c) a reduced sealing clearance (14) between the opening (7) and the outer compartment (6b),
the deflector (11c) presenting an outer surface (17a) placed in the outer compartment (6b), the said outer surface being slanted towards the opening (7) at an angle β lying between 10° and 80° relative to a radial direction, said bearing being **characterised in that** the deflector (11c) presents a free end (15) that is placed radially opposite the outside section (12c).

2. Roller bearing according to claim 1, **characterised in that** the angle β lies between 40° and 60°.

3. Roller bearing according to one of claims 1 or 2, **characterised in that** the deflector (11c) presents an inner surface (17b) placed in the inner compartment (6a), with the said inner surface surrounding the bottom (13a) of the U-shaped geometry.

4. Roller bearing according to claim 3, **characterized in that** the inner surface (17b) is slanted towards the opening (7) at an angle γ lying between 40° and 60° relative to a radial direction.

5. Roller bearing according to claim 4, **characterised in that** the angle γ of the inner surface (17b) is smaller than the angle β of the outer surface (17a).

6. Roller bearing according to one of the claims 4 or 5, **characterised in that** the outside section (12c) presents a common edge (16) with the opening (7), the inner surface (17b) being placed sensibly in the alignment of the said edge.

7. Roller bearing according to any one of claims 1 to 6, **characterised in that** the outside section (12c) is slanted on the outside at an angle α of less than 30° relative to an axial direction.

8. Roller bearing according to claim 7, **characterised in that** the slant angle β of the outer surface (17a) and the slant angle α of the outside section (12c) are such that: β = - α/2 + θ, with θ being a positive angle greater than a/2 and less than 80°, so that β is greater than α.

9. Roller bearing according to any one of claims 1 to 8, **characterised in that** the sealing element (11) presents a lip (11a) placed in the outer compartment (6b).

10. Roller bearing according to claim 9, **characterised in that** the lip (11a) presents an outside end (25) in rubbing contact on the radial section (12a), with the said outside end placed on a diameter D that is greater than the diameter D' of the bottom (13a) of the U-shaped geometry.

11. Roller bearing according to any one of claims 1 to 10, **characterised in that** the wall (12) presents an axial section (12b) placed in the extension of a rolling track (2a) of the second organ (2), with the sealing element (11) presenting a lip (11b) placed in the outer compartment (6b).

12. Roller bearing according to any one of claims 1 to 11, **characterised in that** the wall (12) is formed in the second organ (2).

13. Roller bearing according to any one of claims 1 to 12, **characterised in that** the sealing element (11) presents a crown (11d) placed in the radial extension of the outer wall (13c), with the deflector (11c) extending from the said crown.

14. Roller bearing according to any one of claims 1 to 13, **characterised in that** the frame (10) presents an upstream sector (10b) linked to the first organ (1).

15. Roller bearing according to claim 14, **characterised in that** the upstream sector (10b) has a deflector (20) that is interposed between the outside and the upstream part of the opening (7).
